(19) Europäisches Patentamt / European Patent Office / Office européen des brevets

(11) **EP 2 712 760 A1**

(12) **DEMANDE DE BREVET EUROPEEN**

(43) Date de publication:
**02.04.2014 Bulletin 2014/14**

(51) Int Cl.:
**B60L 3/10** (2006.01)    **B60T 8/17** (2006.01)
**H02P 5/685** (2006.01)

(21) Numéro de dépôt: **12290320.6**

(22) Date de dépôt: **27.09.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Siemens SAS**
**93200 St. Denis (FR)**

(72) Inventeur: **Consoli, Luciano**
**75015 Paris (FR)**

(74) Mandataire: **Fischer, Michael**
**Siemens AG**
**Postfach 22 16 34**
**80506 München (DE)**

(54) **Dispositif et méthode de detection de frottement roue-piste**

(57)     La présente invention décrit un dispositif et une méthode de détection d'un frottement roue-piste adapté à la détection d'un frottement d'une roue d'un véhicule (6) avec une piste, ledit dispositif étant caractérisé en ce qu'il comprend:

- un circuit électrique comprenant deux branches (11, 12) montées en pont, chaque branche comprenant n tronçons électriquement connectés en série l'un à l'autre en un point de raccordement dénoté $A_i$ pour la première branche (11), et $A_{i+n}$ pour la seconde branche (12), $n \geq$ 2 et i = 1, ..., n-1, chaque tronçon comprenant une même résistance ($R_1$, $R_2$, $R_3$, $R_4$) et un même générateur électrique ($G_1$, $G_2$, $G_3$, $G_4$), chaque générateur électrique ($G_1$, $G_2$, $G_3$, $G_4$) étant au moins apte à fournir en énergie électrique ledit tronçon qu'il équipe;

- chaque générateur électrique ($G_1$, $G_2$, $G_3$, $G_4$) comprenant un moyen de couplage (C1, C2, C3, C4) apte à le coupler à un élément (E1, E2, E3, E4) entrainable en rotation par une roue dudit véhicule, de sorte que ladite énergie électrique soit susceptible d'être générée par ledit générateur ($G_1$, $G_2$, $G_3$, $G_4$) à partir de la rotation dudit élément;

- un mesureur de tension (4) apte à mesurer la tension $U_{Ax,Ay}$ entre le point de raccordement $A_x$ et le point de raccordement $A_y$ et à signaler une valeur de tension dépassant une valeur seuil, où $x \in \{1, ,n-1\}$ et $y \in \{n+1, , 2n-1\}$.

FIG 3

**Description**

La présente invention concerne un dispositif et une méthode de détection d'un frottement roue-piste, selon le préambule des revendications 1 et 12.

En particulier, la présente invention concerne les véhicules lourds, i.e. des véhicules pour lesquels la puissance d'une seule roue ou d'un seul essieu en traction ou freinage par rapport à l'ensemble du véhicule n'est pas suffisante pour provoquer une altération du régime de marche dudit véhicule. Un véhicule lourd est par exemple un véhicule ferroviaire, un "poids lourd", i.e. un véhicule routier de plus de 3.5 tonnes, ou encore un "véhicule guidé". Par véhicule guidé, il est notamment fait référence de manière générale aux moyens de transport en commun tels que des bus, trolleybus, tramways, métros, trains ou unités de train, etc., mais aussi aux moyens de transport de charge tel que, par exemple, les ponts roulants, pour lesquels l'aspect sécuritaire est très important et pour lesquels le guidage est assuré en particulier par au moins un rail dont le rôle est de définir la trajectoire du véhicule guidé au cours de son déplacement.

Pour de tels véhicules, un problème peut survenir lorsqu'une roue ou un essieu est, dans un premier cas, soit bloqué alors que le véhicule est en marche, ou dans un second cas, en rotation alors que le véhicule est à l'arrêt. En effet, il est possible qu'à l'arrêt, même si une seule roue ou un seul essieu est tracté, l'effort de freinage des autres composants assure l'immobilisation du véhicule, et qu'au contraire, qu'une roue ou un essieu bloqué n'altère pas la marche du véhicule.

Dans un cas comme dans l'autre, la sécurité des occupants du véhicule peut être mise à mal. En effet, une roue qui tourne lorsque le véhicule est à l'arrêt peut par exemple engendrer un rapide échauffement de son pneu et dégager des fumées toxiques susceptibles de s'enflammer en présence d'une source de chaleur ou même de s'auto-enflammer si les températures dépassent 600°C. Un tel incident s'est par exemple produit le 6 août 2005 dans le métro parisien sur la ligne 4 de la RATP. Dans le cas d'un véhicule ferroviaire, un essieu en rotation alors que le véhicule est à l'arrêt peut provoquer une usure précoce des roues et des rails, et les abîmer. Et le cas contraire, i.e. une roue ou un essieu bloqué alors que le véhicule est en déplacement peut engendrer des efforts non symétriques sur le véhicule, compromettre sa stabilité, voire le faire dérailler.

Afin d'éviter le problème susmentionné, il est usuel de contrôler le couple au niveau du moteur entrainant la roue ou le couple de roues le plus susceptible de glisser (p. ex. distribution de charge hétérogène), ou sinon, en amont directement dans le système de traction.

Afin de détecter le problème susmentionné, plusieurs solutions existent:

- il est par exemple possible d'utiliser des relais différentiels contrôlés par les différences de voltage/courant entre les moteurs de traction. L'inconvénient de ce type de système est que les amplitudes de tension et de courant changent selon le régime de marche (vitesse, départ, freinage, ...) et qu'il est donc nécessaire de couvrir toutes les plages de vitesses possibles;

- des balais ou "brush" commandés par un arbre d'essieu permettent de détecter l'existence d'un différentiel de vitesse entre les essieux au moyen de contacts avec des commutateurs. Cependant, ce système est connu pour ne pas être fiable sur de longues périodes d'utilisation à cause de l'usure des surfaces de contact du commutateur et du balai;

- le document US 2,735,090 A intitulé "Apparatus for detection of nonsynchronous rotation of locomotiv axles" propose d'associer à chaque essieu un générateur qui délivre une fréquence proportionnelle à la vitesse angulaire de l'essieu. Une tension proportionnelle à la fréquence est ensuite générée et comparée entre les différents essieux. Une variation d'amplitude signifie que la rotation n'est pas synchronisée;

- un autre système utilisé actuellement et tel que décrit dans US 2004/0130618 A1 consiste à faire une capture d'image des roues. Après une analyse de la position relative de la roue, il est possible de déterminer si elle est en train de tourner ou pas. D'une manière similaire, US 2006/0180760 A1 décrit une capture thermique de l'image d'une roue afin d'identifier une montée en température de la roue résultant d'un frottement roue/piste ou roue/rail;

- d'autres systèmes tel que décrits dans US 4,071,282 et US2008/0211434 A1 sont basés sur l'utilisation combinée d'une roue dentée entrainée corrélativement à une roue du véhicule, par exemple montée directement sur ladite roue du véhicule, et d'un faisceau lumineux ou un générateur d'impulsions périodiquement coupé par les dents de ladite roue. Un système centralisé permet alors de comparer des signaux issus des différentes roues (ou essieux) et ensuite d'identifier une différence de comptage des impulsions. Le circuit permet des actions correctives, comme la coupure de la traction ou le freinage d'urgence.

Afin de détecter et corriger le problème susmentionné, le document US 4,463,289 A1 propose un dispositif de contrôle du glissement de roues de locomotive tractées par des moteurs électriques alimentés par un générateur, ledit dispositif étant capable de récupérer la vitesse de chaque essieu, et de dériver le signal représentant la différence entre la vitesse la plus grande et la plus petite. La dérivée est ensuite comparée avec le courant (ou puissance) de sortie du générateur électrique alimentant lesdits moteurs électriques, et en fonction de ces deux paramètres, le générateur électrique est alors capable de maximiser le courant d'alimentation durant la phase d'accélération.

Malheureusement, les solutions proposées ci-dessus ont les désavantages suivants:

- elles nécessitent des relais différentiels devant travailler sur une grande amplitude de tension et de courant; et/ou
- elles comportent des éléments qui s'usent en cours d'utilisation, nécessitant dès lors maintenance et remplacement; et/ou
- l'information corrélée à la rotation des roues du véhicule nécessite un traitement complexe par exemple en transformant une variation de fréquence ou d'inductance en variation de tension, ou en émettant et en comptant des impulsions électriques, cela avant de pouvoir être analysée pour détecter un glissement; et/ou
- elles comportent de nombreux composants, ce qui augmente la probabilité de pannes et diminue la fiabilité des systèmes.

Ainsi, les systèmes actuels permettant de détecter le frottement roue-piste présentent chacun plusieurs inconvénients auxquels la présente invention se propose de remédier. En effet, un objectif de la présente invention est de proposer un dispositif et une méthode de détection du frottement roue-piste qui soient simples, sûrs et fiables, notamment en conditions extérieures difficiles (grandes variations de température, vibrations), utilisant un minimum de composants, économiquement avantageux, et pouvant être facilement implémentés à tout type de véhicule.

Afin de parvenir à cet objectif, un dispositif et une méthode sont proposés par le contenu des revendications 1 et 12.

Un ensemble de sous-revendications présente également des avantages de l'invention.

La présente invention se rapporte à un dispositif de détection d'un frottement roue-piste adapté à la détection d'un frottement d'une roue d'un véhicule avec une piste et destiné à équiper ledit véhicule, ledit dispositif étant caractérisé en ce qu'il comprend:

- un circuit électrique, en particulier de type "Pont de Wheatstone", comprenant deux branches, respectivement une première branche et une seconde branche, montées en pont et s'intersectant en un premier noeud $A_0$ et en un second noeud $A_n$, chaque branche comprenant n tronçons électriques, avec $n \geq 2$, chaque tronçon comprenant une même résistance électrique (i.e. de même valeur ohmique R, ayant un même comportement face à des variations de températures) et un même générateur électrique connectés en série l'un à l'autre de façon à ce que le générateur électrique soit apte à alimenter ledit tronçon en énergie électrique;
- chaque tronçon électrique de chaque branche étant électriquement connectés en série les uns aux autres en des points de raccordement dénotés $A_i$ pour la première branche, et $A_{n+i}$ pour la seconde branche, i = 1, ..., n-1, avec par exemple, n étant le nombre de tronçons par branche, lesdits tronçons étant dès lors notés $T_1$, ... , $T_n$, et $A_i$, respectivement $A_{n+i}$, étant le point de raccordement entre le $i^{ème}$ tronçon, noté $T_i$, et le $i+1^{éme}$ tronçon, noté $T_{i+1}$, de la première branche, respectivement de la seconde branche, lesdits tronçons étant comptés successivement de $T_1$ à $T_n$ à partir dudit premier noeud $A_0$ jusqu'au second noeud $A_n$, $T_1$ étant le premier tronçon électriquement connecté en série au premier noeud $A_0$ et au premier point de raccordement $A_1$ de la première branche, respectivement au premier noeud $A_0$ et au premier point de raccordement $A_{1+n}$ de la seconde branche, et $T_{i+1}$ étant le $i+1^{éme}$ tronçon de la première branche, respectivement de la seconde branche, électriquement connecté en série au $i^{ème}$ tronçon $T_i$ au point de raccordement Ai pour la première branche, respectivement $A_{n+i}$ pour la seconde branche, et le $n^{ième}$ tronçon $T_n$ de la première branche, respectivement de la seconde branche, étant de plus électriquement connecté en série au second noeud $A_n$;
- pour chaque branche, lesdits tronçons étant en particulier connectés les uns aux autres de façon à ce que les générateurs électriques et les résistances électriques de chaque branche soient connectés en série les uns aux autres, chaque générateur électrique étant au moins apte à fournir en énergie électrique ledit tronçon qu'il équipe;
- chaque générateur électrique comprenant un moyen de couplage apte à le coupler à un élément entrainable en rotation par la rotation d'au moins une roue dudit véhicule, de sorte que ladite énergie électrique soit susceptible d'être générée par ledit générateur à partir de la rotation dudit élément, ledit élément étant par exemple un élément activement entrainable en rotation par une motorisation dudit véhicule, ou passivement entrainé en rotation, et destiné à l'entraînement, ou associé à l'entrainement, en rotation d'au moins une roue du véhicule;
- un mesureur de tension apte à mesurer la tension $U_{Ai,An+i}$ entre le point de raccordement $A_i$ et le point de raccordement $A_{n+i}$, et à signaler une valeur de tension dépassant une valeur seuil, en particulier le mesureur est capable de mesurer la tension $U_{Ax,Ay}$ entre le point de raccordement $A_x$ et le point de raccordement $A_y$ où $x \in \{1, , n-1\}$ et $y \in \{n+1, , 2n-1\}$.

La présente invention se rapporte également à une méthode de détection d'un frottement roue-piste adapté à la détection d'un frottement d'une roue d'un véhicule avec une piste, ladite méthode comprenant les étapes suivantes:

- pour chaque élément d'un ensemble comprenant 2n éléments, $2n \geq 4$, chacun entrainable en rotation par la rotation d'au moins une roue, par exemple des éléments activement entrainables en rotation indépendamment les uns des autres par une motorisation dudit véhicule, et chacun étant associé à l'entrainement en rotation de ladite roue du véhicule, une génération par un générateur électrique d'une énergie électrique à partir d'une rotation dudit élément, par exemple par couplage dudit générateur électrique avec ledit élément par un moyen de couplage direct (p. ex. au moyen d'un cardan) ou indirect (p. ex. au moyen d'une courroie), de sorte que ladite énergie électrique soit susceptible d'être générée par ledit générateur à partir de la rotation dudit élément;

- pour chaque énergie électrique générée ou produite par un desdits générateurs électriques, une alimentation avec ladite énergie électrique d'un tronçon électrique d'un circuit électrique, ledit circuit électrique étant en particulier un circuit électrique de type "Pont de Wheatstone", ledit circuit électrique comprenant deux branches, respectivement une première branche et une seconde branche, montées en pont et s'intersectant en un premier noeud $A_0$ et en un second noeud $A_n$, chaque branche comprenant n tronçons électriques raccordés en série les uns à la suite des autres et notés $T_1$ à $T_n$, chaque tronçon comprenant un seul desdits générateurs électriques pour son alimentation en énergie électrique et une résistance électrique, chaque résistance et chaque générateur de chaque branche étant identiques, ladite résistance électrique et ledit générateur électrique étant connectés en série l'un à l'autre de façon à ce que ledit générateur puisse alimenter ledit tronçon avec ladite énergie électrique, chaque tronçon étant raccordé à un autre tronçon en un point de raccordement dénoté $A_i$ pour la première branche, et $A_{n+1}$ pour la seconde branche, avec par exemple i = 1, ..., n-1, n étant le nombre de tronçons par branche et $A_i$, respectivement $A_{n+i}$, étant le point de raccordement entre le $i^{ème}$ tronçon, noté $T_i$, et le i $+1^{ème}$ tronçon, noté $T_{i+1}$, de la première branche, respectivement de la seconde branche, lesdits tronçons étant comptés successivement à partir dudit premier noeud $A_0$ jusqu' au second noeud $A_n$, $T_1$ étant le premier tronçon électriquement connecté en série au premier noeud $A_0$ pour la première branche, respectivement pour la seconde branche, et $T_{i+1}$ étant le i+$1^{ème}$ tronçon de la première branche, respectivement de la seconde branche, électriquement connecté en série au $i^{ème}$ tronçon $T_i$ au point de raccordement $A_i$ pour la première branche, respectivement $A_{n+i}$ pour la seconde branche, le $n^{ème}$ tronçon $T_n$ de la première branche, respectivement de la seconde branche, étant électriquement connecté en série au second noeud $A_n$;

- une mesure de la tension $U_{Ai,An+i}$ entre le point de raccordement $A_i$ et le point de raccordement $A_{n+i}$, en particulier, une mesure de la tension $U_{Ax,Ay}$ entre le point de raccordement $A_x$ et le point de raccordement $A_y$, où $x \in \{1, , n-1\}$ et $y \in \{n+1, , 2n-1\}$. En particulier, une mesure de tension entre $A_x$ ou $A_y$ et un point de mise à la terre du circuit électrique pourrait fournir d'autres points de mesures permettant de détecter un frottement roue-piste;

- un signalement d'une valeur de tension $U_{Ai,An+i}$, ou en particulier $U_{Ax,Ay}$, dépassant une valeur seuil, par exemple par transmission dudit signalement, ou envoi d'un signal, à un poste de contrôle, ledit poste de contrôle pouvant par exemple être embarqué ou au sol.

Le circuit électrique selon l'invention est de préférence du type "Pont de Wheatstone". De manière classique, il est connu de l'homme du métier qu'un pont de Wheatstone comprend une borne d'entrée de courant, une borne de sortie de courant, une borne positive de mesure, une borne négative de mesure, et quatre résistances. Le pont de Wheatstone est notamment formé de deux branches montées en pont, respectivement une première branche reliant successivement la borne d'entrée de courant, une quatrième résistance, la borne positive de mesure, une première résistance, et la borne de sortie de courant, et une seconde branche reliant successivement la borne d'entrée de courant, une troisième résistance, la borne négative de mesure, une seconde résistance, et la borne de sortie de courant. Lesdites branches sont connectées l'une à l'autre en un premier et un second noeud qui forment respectivement ladite borne d'entrée de courant et ladite borne de sortie de courant. Chaque partie de la branche comprise entre la borne d'entrée de courant et la borne positive ou négative de mesure, ou entre la borne positive ou négative de mesure et la borne de sortie de courant forme un tronçon de raccordement.

Par analogie au pont de Wheatstone, le dispositif de détection selon l'invention propose un circuit électrique comprenant également ladite première branche et ladite seconde branche tel que définie pour le pont de Wheatstone, à la différence que chaque branche comprend préférentiellement successivement un générateur électrique adapté pour alimenter ladite branche en énergie électrique (courant ou tension), une résistance, un point de raccordement équivalent à ladite borne de mesure (positive ou négative selon la branche), un autre générateur, et une autre résistance. Dans le cas de la présente invention, la tension entre la borne d'entrée de courant et la borne de sortie de courant est nulle. De plus, les générateurs électriques et les résistances électriques du dispositif de détection selon l'invention sont tous et toutes identiques. Préférentiellement, le circuit électrique selon l'invention comprend un nombre de tronçons par branche supérieur à deux.

En effet, la présente invention a précisément pour but d'identifier d'une manière rapide, sûre et fiable une différence de vitesse de rotation entre des roues et/ou des essieux d'un véhicule lorsque ce dernier se déplace sur ladite piste, que ce soit un véhicule ferroviaire, un métro/tramway en roue fer ou pneumatique, ou un véhicule routier de transport lourd. A cette fin, une identification d'une différence de vitesse angulaire entre des roues et/ou des essieux dudit véhicule est effectuée par couplage d'un élément destiné à entrainer en rotation la roue/essieu avec le générateur électrique d'un des tronçons selon l'invention, ledit générateur agissant dès lors comme source de tension ou courant. En particulier, ledit générateur électrique peut être un générateur à tension constante, ou un générateur tachymétrique, ou un générateur de tension alternée, ou même un générateur de courant. Ainsi, contrairement au pont de Wheatstone pour lequel ce sont les résistances qui varient, la présente invention propose une variation des sources de tension ou courant qui sont chacune corrélées à la vitesse angulaire d'une roue/essieu afin de déterminer si une roue/essieu tourne à un régime différent.

Au moment de l'identification de cette différence de régime par le mesureur de tension, la différence de potentiel entre les points de raccordement $A_x$ et $A_y$ du dispositif selon l'invention dépasse ladite valeur seuil, par exemple un niveau de déclenchement d'un relai de sécurité, qui par exemple envoie ainsi un signal ou une information de coupure de signal à un ou plusieurs systèmes en charge de la sécurité (ex. freinage, inhibition de traction, alarme, etc.) du véhicule.

De manière générale, il suffit en particulier que chaque tronçon selon l'invention comprenne des composants identiques aux composants des autres tronçons, par exemple un même générateur et une même résistance. De manière préférentielle, le dispositif de détection selon l'invention est caractérisé en ce que chaque tronçon est disposé de façon à ce que, du premier noeud Ao au second *noeud* $A_n$, se succèdent alternativement ledit générateur électrique et ladite résistance électrique, le générateur électrique du premier tronçon de chaque branche étant connecté directement audit premier noeud $A_0$. Par exemple, chaque tronçon $T_k$ de la première et respectivement de la seconde branche avec k = 1, ,n, est disposé de façon à ce que:

- son générateur électrique soit directement connecté au premier noeud $A_0$ et sa résistance électrique au premier point de raccordement $A_1$ pour la première branche, respectivement $A_{k+n}$ pour la seconde branche, lorsque k = 1;
- son générateur électrique soit directement connecté au point de raccordement $A_{k-1}$ pour la première branche, respectivement $A_{k+n-1}$ pour la seconde branche et sa résistance électrique soit directement raccordée au point de raccordement $A_k$ pour la première branche, respectivement $A_{k+n}$ pour la seconde branche, lorsque 1 < k < n;
- son générateur électrique soit directement connecté au point de raccordement $A_{n-1}$ pour la première branche, respectivement $A_{n+k-1}$ pour la seconde branche, et sa résistance électrique soit directement raccordée au point de raccordement $A_n$ pour la première et la seconde branche lorsque k = n.

Selon un mode préféré de réalisation, le dispositif de détection selon l'invention est caractérisé en ce que chaque branche comprend deux tronçons, i.e. n=2, le générateur électrique du premier tronçon $T_1$ de la première branche étant apte à être couplé à un élément activement entrainable en rotation pour l'entrainement en rotation d'une première roue du véhicule, et ledit générateur électrique du second tronçon $T_2$ de la première branche étant apte à être couplé à un élément activement entrainable en rotation pour l'entrainement en rotation d'une seconde roue dudit véhicule, et en ce que pour la seconde branche, ledit générateur électrique du premier tronçon $T_1$ est apte à être couplé à un élément activement entrainable en rotation pour l'entraînement en rotation d'une troisième roue du véhicule, et ledit générateur électrique du second tronçon $T_2$ est apte à être couplé à un élément activement entrainable en rotation pour l'entrainement en rotation d'une quatrième roue du véhicule.

Selon une première variante préférentielle, ladite première et ladite troisième roue ont un axe de rotation confondu, et ladite seconde et ladite quatrième roue ont également un axe de rotation confondu, différent de l'axe de rotation de la première ou de la troisième roue. Selon une seconde variante préférentielle, la première et la quatrième roue ont un axe de rotation confondu, et la seconde et la troisième roue ont également un axe de rotation confondu, différent de l'axe de rotation de la première ou de la quatrième roue.

Préférentiellement, ledit élément activement entrainable en rotation par une motorisation dudit véhicule pour l'entrainement en rotation d'au moins une roue du véhicule est un axe d'entrainement en rotation d'une roue, ou un axe de rotation d'une roue, ou encore un essieu dudit véhicule. En particulier, ledit moyen de couplage selon l'invention est apte à accoupler ledit générateur électrique audit axe d'entrainement en rotation d'une roue, ou directement audit axe de rotation de la roue, ou audit essieu dudit véhicule, de façon à ce que ledit générateur électrique soit apte à produire ladite énergie électrique à partir de la rotation dudit axe d'entrainement en rotation, ou dudit axe de rotation de la roue, ou dudit essieu. Ledit moyen de couplage comprend par exemple un arbre de transmission et un système d'engrenage, ou à cardan, ou encore, un système de courroie. Aussi, la méthode selon l'invention est ainsi en particulier caractérisée par un couplage dudit générateur électrique avec un axe de rotation d'une roue dudit véhicule ou un essieu, ou un axe d'entrainement en rotation de la roue, ledit axe d'entrainement, ledit axe de rotation ou ledit essieu étant dès lors un des éléments dudit ensemble comprenant 2n éléments selon la présente invention. Les autres éléments dudit ensemble d'éléments étant dès lors respectivement des axes de rotation d'autres roues du véhicule, des axes d'entrainement en rotation d'autres roues du véhicule, ou d'autres essieux dudit véhicule.

Préférentiellement, la méthode de détection selon l'invention est caractérisée en ce que chaque tronçon de ladite première branche est apte à être alimenté en énergie électrique par des éléments destinés à entrainer en rotation des roues gauches du véhicule par rapport à son sens de déplacement en marche avant et chaque tronçon de ladite seconde branche est apte à être alimenté en énergie électrique par des éléments destinés à entrainer en rotation des roues droites du véhicule par rapport à son sens de déplacement en marche avant ou inversement.

Finalement, des exemples de réalisation et d'application permettant de mieux comprendre la présente invention sont fournis à l'aide des figures suivantes:

Figure 1     Exemple de réalisation d'un dispositif de détection selon l'invention, pour lequel chaque générateur électrique est couplé à un essieu du véhicule;

Figure 2     Exemple de réalisation d'un dispositif de détection selon l'invention, pour lequel chaque générateur électrique est couplé à un axe de rotation d'une roue du véhicule;

Figure 3     Exemple de réalisation d'un dispositif de détection selon l'invention, pour lequel chaque générateur électrique est couplé à un axe de rotation d'une roue du véhicule selon un ordre particulier;

Figure 4     Exemple de réalisation d'un dispositif de détection selon l'invention comprenant quatre tronçons par branche.

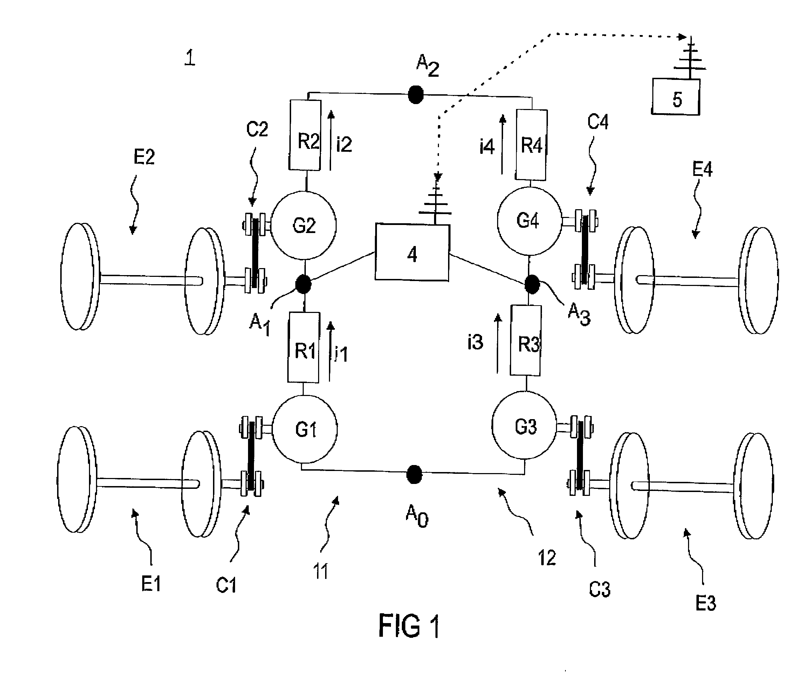

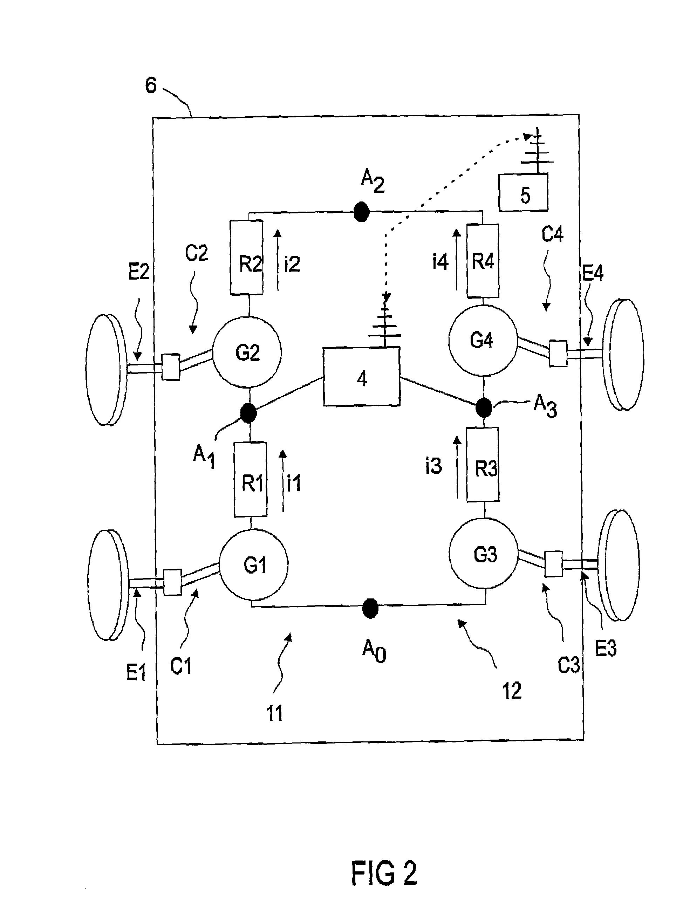

Les Figures 1 et 2 présentent chacune un exemple de réalisation d'un dispositif de détection selon l'invention qui diffèrent l'un de l'autre uniquement en ce que chaque générateur électrique est couplé à un essieu du véhicule en Figure 1, et à un axe de rotation d'une roue dudit véhicule en Figure 2.

En particulier, les dispositifs de détection selon l'invention des Figures 1 et 2 comprennent:

- un circuit électrique 1 de type "Pont de Wheatstone", comprenant une première branche 11 et une seconde branche 12 montées en pont et s'intersectant en un premier noeud $A_0$ et en un second noeud $A_2$, chaque branche comprenant n = 2 tronçons électriques, chaque tronçon comprenant une même résistance électrique $R_1 = R_2 = R_3 = R_4$ et un même générateur électrique $G_1$, $G_2$, $G_3$, $G_4$, connectés en série l'un à l'autre de façon à ce que chacun des générateurs électriques $G_1$, $G_2$, $G_3$, $G_4$ soit apte à alimenter en énergie électrique le tronçon qu'il équipe;
- lesdits tronçons de la première branche 11 étant électriquement connectés en série l'un à l'autre en un point de raccordement $A_1$ et les tronçons de la seconde branche étant électriquement connectés en série l'un à l'autre en un point $A_3$;
- lesdits tronçons étant comptés successivement à partir dudit premier noeud $A_0$ jusqu' au second noeud $A_2$, $T_1$ étant le premier tronçon électriquement connecté en série au premier noeud $A_0$ pour la première branche, respectivement pour la seconde branche, et $T_2$ étant le $2^{ème}$ tronçon de la première branche, respectivement de la seconde branche, électriquement connecté en série au premier tronçon $T_1$ au point de raccordement $A_1$ pour la première branche, respectivement $A_3$ pour la seconde branche, le $2^{ème}$ tronçon $T_2$ de la première branche et de la seconde branche étant chacun électriquement directement connecté en série au second noeud $A_2$;

- chaque générateur électrique $G_1$, $G_2$, $G_3$, $G_4$ comprenant un moyen de couplage C1, C2, C3, C4, par exemple à courroie ou par engrenage ou par cardan, apte à le coupler à un élément E1, E2, E3, E4, par exemple un essieu, passivement entrainable en rotation, ou activement entrainable en rotation par une motorisation dudit véhicule, lors de l'entrainement en rotation d'au moins une roue du véhicule à laquelle il est associé, de sorte que ladite énergie électrique soit susceptible d'être générée/produite par ledit générateur $G_1$, $G_2$, $G_3$, $G_4$ à partir de la rotation dudit essieu;
- un mesureur de tension 4 apte à mesurer la tension $U_{A1,A3}$ entre le point de raccordement $A_1$ et le point de raccordement $A_3$, et à signaler une valeur de tension dépassant une valeur seuil, en la communiquant par exemple à un poste de contrôle 5 auquel il peut en particulier être connecté à distance ou par câblage.

A la différence de la Figure 1, les générateurs électriques $G_1$, $G_2$, $G_3$, $G_4$ représentés en Figure 2 sont chacun couplés par un moyen de couplage C1, C2, C3, C4, par exemple à courroie ou par engrenage ou par cardan, à un axe de rotation E1, E2, E3, E4 d'une roue du véhicule 6, chacun étant ainsi couplé à un axe de rotation différent et indépendant des autres axes de rotation, ledit véhicule comprenant notamment ledit poste de contrôle 5 susceptible de recevoir un signal dudit mesureur de tension 4.

Ainsi que présenté en Figure 1 ou 2, chaque roue ou essieu du véhicule 6 entraîne un générateur électrique $G_1$, $G_2$, $G_3$, $G_4$ différent, en particulier par un accouplement direct (par ex. cardan) ou indirect (par ex. courroie). Dans le cas d'un circuit électrique comprenant n tronçons, ses générateurs électriques seront notés $G_j$ avec j = 1, ,2n, les générateurs électriques $G_1$, ,$G_n$ appartenant respectivement aux tronçons $T_1$, $T_n$ de la première branche et les générateurs électriques $G_{n+1}$, $G_{2n}$ appartenant respectivement aux tronçons $T_1$, ,$T_n$ de la seconde branche. Chaque générateur électrique $G_j$ est associé avec une résistance $R_j$ de valeur identique, notée $R_1$, $R_2$, $R_3$, $R_4$, dans le cas présent où n = 2. Au travers de chaque résistance $R_j$ circule un courant, noté i1, i2, i3, i4 dans le cas des Figures 1 et 2. Le mesureur de tension 4 est dès lors capable de détecter une différence de potentiel appelée $U_{A1,A3}$ entre les points de raccordement $A_1$ et $A_3$.

L'exemple donné en Figure 2 s'applique en particulier à un véhicule métro pourvu par exemple de quatre roues pneumatiques tractées chacune par un moteur électrique. Cependant, la présente invention peut avantageusement s'appliquer à d'autres types de véhicules comme par exemple un train à roues fer en permettant un contrôle de la vitesse de rotation des essieux, ou encore à un camion poids lourd, mais aussi à une voiture de métro ou train non tractée.

La rotation de chacune des roues du véhicule directement ou indirectement couplée à un desdits générateurs électriques selon l'invention entraîne la production par ledit générateur électrique $G_j$ auquel elle est couplée d'une tension Vj proportionnelle à la vitesse de rotation de ladite roue, j = 1, ,2n avec 2n = 4 dans le cas de la Figure 2. A part les tolérances entre les composants et entre les périmètres de roulement des roues/essieux, les tensions fournies par chaque générateur sont exactement les mêmes. Comme les quatre générateurs électriques $G_1$, $G_2$, $G_3$, $G_4$ sont connectés en série avec des résistances de même valeur ohmique conformément au circuit de la Figure 2, la tension $U_{A1,A3}$ théorique entre les points de raccordement $A_1$ et $A_3$ sera donnée par:

$$U_{A1,A3} = \frac{V2 - V4 + V3 - V1}{2} \quad (1)$$

Où V1, V2, V3 et V4 représentent les tensions générées par chaque générateur.

Dans le mode de réalisation particulier de l'invention selon la Figure 2, les roues du véhicule ayant un axe de rotation confondu (i.e. les roues droites et gauches du véhicule qui se trouvent en vis-à-vis l'une de l'autre) sont respectivement couplées à un générateur électrique $G_k$ appartenant à la première branche et à un générateur électrique $G_{k+n}$ appartenant à la seconde branche, avec k $\in$ {1, ,n}. Un générateur électrique $G_k$ ou une résistance $R_k$ appartenant à la première branche 11, respectivement un générateur électrique $G_{k+n}$ ou une résistance $R_{k+n}$ appartenant à la seconde branche 12, appartient au tronçon $T_k$ de ladite première branche, respectivement de la seconde branche, qui est compris entre

$A_0$ et $A_k$, respectivement Ao et $A_{n+k}$, si k = 1;

$A_{k-1}$ et $A_k$, respectivement $A_{n+k-1}$ et $A_{n+k}$ si 1 < k < n;

$A_{k-1}$ et $A_n$, respectivement $A_{n+k-1}$ et $A_n$ si k = n.

Dans chaque tronçon $T_k$, le générateur électrique $G_k$, respectivement $G_{k+n}$, peut précéder la résistance $R_k$, respectivement $R_{k+n}$, ou inversement.

Ainsi, les entrainements en rotation indépendants de roues droites et gauches ayant un axe de rotation confondu sont destinés à être couplés respectivement au générateur électrique $G_k$ et $G_{k+n}$ appartenant aux tronçons $T_k$ de la première et respectivement de la seconde branche. Lorsque les roues tournent toutes à la même vitesse, alors les tensions V1, V2, V3 et V4 ont toutes la même valeur, i.e. V1 = V2 = V3 = V4, et la tension $U_{A1,A3}$ sera nulle pour n'importe quelle vitesse du véhicule. Par contre, si une de ces roues rompt le régime de rotation des autres roues et tourne à une vitesse différente des autres roues, alors un déséquilibre est créé dans les branches du circuit électrique selon l'invention, et la tension $U_{A1,A3}$ cesse d'être nulle. En particulier, le mesureur de tension 4 est capable de détecter si la tension $U_{A1,A3}$ est non nulle et est apte par exemple à déclencher un système d'alarme ou à ouvrir une boucle de sécurité qui avertirait un opérateur au poste de contrôle, ou encore à transmettre un signal d'avertissement à un système de commande centrale ou un système d'automatisme dudit véhicule dès que la tension $U_{A1,A3}$ diffère de la valeur nulle. La valeur seuil selon l'invention est dans ce cas particulier une valeur nulle de tension, et le mesureur de tension est capable de détecter si la tension $U_{A1,A3}$ diffère ou non de cette valeur seuil.

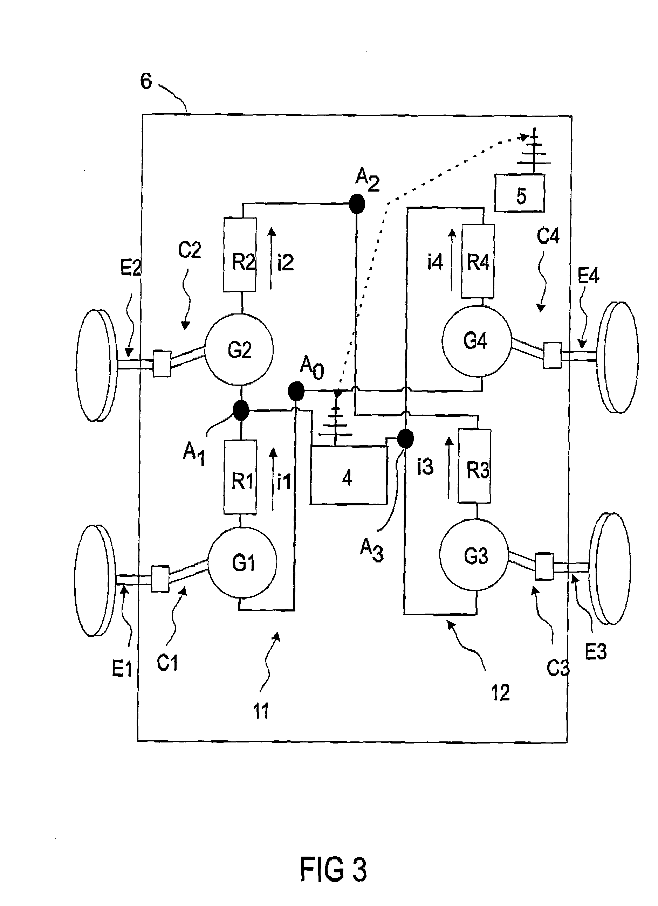

La Figure 3 décrit un autre mode de réalisation particulier de l'invention permettant avantageusement d'éviter une fausse détection de différence de vitesse de rotation de certaines roues lorsque ledit véhicule aborde une trajectoire curviligne. En effet, lorsque ledit véhicule aborde une courbe, la différence de vitesse de rotation entre les roues extérieures et les roues intérieures à la courbe est susceptible de déclencher une fausse alerte. Il s'agit en effet d'une "fausse" alerte car cette différence de vitesse de rotation est simplement due à la trajectoire curviligne et non à un déplacement avec frottement d'une des roues. Par contre, lorsque le véhicule se trouve inscrit dans une courbe de rayon constant, bien que les roues extérieures du véhicule tournent plus vite que les roues intérieures, le mode de réalisation particulier présenté en Figure 2 ne déclenche pas de fausses alertes de détection de frottement d'une roue, puisque: V1 = V2 < V3 = V4 (cas où les axes de rotation E2 et E4 appartiennent à des roues antérieures par rapport au sens de déplacement du véhicule qui se déplace dans une courbe à gauche, E1 et E3 étant des axes de rotation de roues postérieures), et donc, selon la formule mathématique (1), $U_{A1,A3}$ = 0. Ainsi, un problème de détection de fausses alertes ne se pose ni en alignement droit (i.e. trajectoire rectiligne), ni en courbe de rayon constant, mais uniquement lors de l'inscription du véhicule dans une courbe, car dans ce cas V2 < V1 = V3 < V4 et donc $U_{A1,A3}$ est non nulle.

Le mode de réalisation particulier de la Figure 3 permet de résoudre ce problème de fausse alerte par un couplage approprié des éléments entrainables en rotation par la rotation d'une roue du véhicule auxdits générateurs électriques. En effet, dans le cas particulier de la Figure 3 pour laquelle n = 2, la solution consiste à réarranger le circuit électrique selon l'invention de façon à ce que les soustractions V2-V4 et V3-V1 de la formule (1) soient faites entre les tensions générées par des générateurs électriques couplés à des éléments entrainables en rotation par des roues disposées à des côtés opposés par rapport l'axe longitudinal (droite-gauche) et transversal (devant-derrière) du véhicule, conformément à la Figure 3. Dans ce cas, la tension $U_{A1,A3}$ théorique entre les points de raccordement $A_1$ et $A_3$ sera donnée par:

$$U_{A1,A3} = \frac{V2 - V3 + V4 - V1}{2} \quad (2)$$

Bien entendu, l'homme du métier saura appliquer un raisonnement analogue dans le cas d'un ensemble comprenant 2n éléments avec n > 2, lesdits éléments étant entrainables en rotation indépendamment les uns des autres par la rotation d'au moins une roue dudit véhicule. Egalement, l'homme du métier saura trouver d'autres configurations du circuit électrique: par exemple, selon la Figure 3, le "croisement" a été fait entre les essieux avant-arrière à droite (i.e. se succèdent dans le circuit Ao, $G_1$, $R_1$, $A_1$, $G_2$, $R_2$, $A_2$, $R_3$, $G_3$, $A_3$, $R_4$, puis $G_4$ et retour sur $A_0$. Mais d'autres croisements pourraient également être réalisés, par exemple à gauche, de sorte que l'on aurait successivement: $A_0$, $G_2$, $R_2$, $A_1$, $G_1$, $R_1$, $A_2$, $R_4$, $G_4$, $A_3$, $R_3$, et $G_3$, puis retour sur $A_0$, ou encore, entre avant droit et arrière gauche ou inversement.

La configuration particulière du dispositif de détection selon la Figure 3 permet par exemple de calculer pour une inscription dudit véhicule en courbe une tension $U_{A1,A3}$ théorique maximum de l'ordre de $\sim 10^{-7}$ V, alors que la configuration particulière selon la Figure 2 du dispositif de détection selon l'invention donne lieu à une tension $U_{A1,A3}$ théorique maximum de l'ordre de -0,03 V pour un véhicule et une courbe ayant les caractéristiques suivantes:

- courbe de 55 m précédée et suivie d'une clothoide de 17 m de long entre deux lignes droites, la clothoide étant une courbe transcendante dont la courbure est proportionnelle à l'abscisse curviligne et utilisée pour réduire le jerk horizontal;
- Distance entre axes: 8,6 m;
- Empattement: 2,08 m;
- Rayon de roulement: 0,495 m;
- Tension de sortie du générateur électrique: 1 V/Hz, le générateur électrique étant dans ce cas particulier un générateur électrique tachymétrique.

Ces valeurs théoriques de tension $U_{A1,A3}$ doivent encore être multipliées par un facteur 10 à 100 afin de représenter la réalité.

Les Figures 2 et 3 présentent des exemples de réalisation du dispositif selon l'invention pour des cas typiques de véhicules comprenant 4 roues indépendantes. Cependant, le dispositif de détection selon l'invention peut également être utilisé pour des véhicules ayant 4 ou plus roues ou essieux. Egalement, plusieurs circuits électriques du dispositif selon l'invention peuvent préférentiellement être reliés en série afin de détecter un possible frottement d'une roue sur une piste, lorsque ledit véhicule comprend 6, 8, ou 10 essieux ou roues. Ainsi, le dispositif de détection selon l'invention est en particulier caractérisé en ce qu'il peut comprendre un premier dispositif de détection de frottement tel que précédemment décrit couplé en série à un second dispositif de détection similaire.

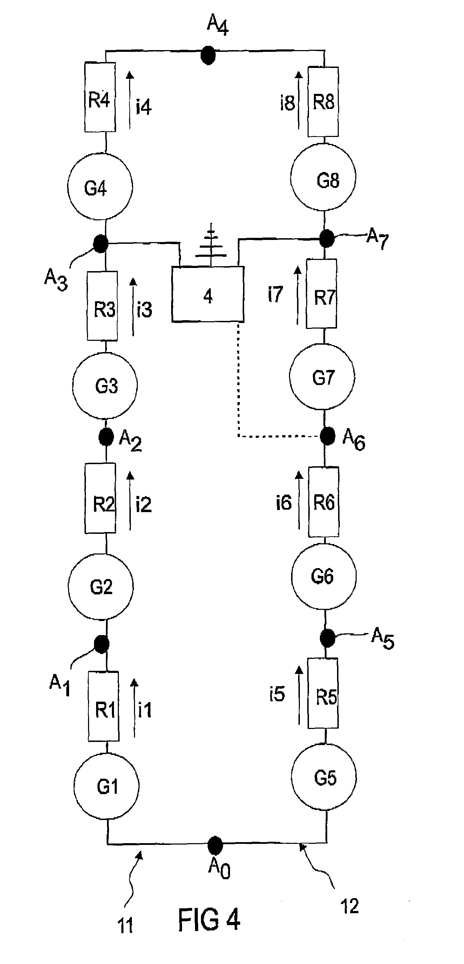

La Figure 4 montre finalement un dispositif de détection selon l'invention destiné à équiper un véhicule comprenant 8 roues ou essieux fer. Dans ce cas, chacune des 8 roues est accouplée à un générateur électrique $G_1$, ..., $G_8$ par un moyen de couplage, par exemple un cardan apte à coupler un axe de rotation de la roue audit générateur électrique $G_1$, ... , $G_8$. Chacun de ces générateurs électriques produit une tension proportionnelle à la vitesse de rotation de la roue. Dès lors, chaque résistance électrique $R_1$,...,$R_8$ est traversée par un courant électrique i1,...,i8. Un mesureur de tension 4 permet de mesurer la tension entre un point de raccordement $A_i$ de la première branche 11 et un point de raccordement $A_{4+i}$ de la seconde branche 12, avec i = 1, ,3 dans ce cas particulier pour lequel n=4. Le couplage de chaque générateur électrique à un élément entrainable en rotation par la rotation d'au moins une roue du véhicule est préférentiellement réalisé de façon à ce qu'une différence de vitesse de rotation d'une desdites roues du véhicule n'entraine pas une fausse détection par le mesureur de tension d'un frottement d'une desdites roues. En particulier, les croisements mentionnés plus haut sont applicables mutatis mutandis au circuit électrique de la Figure 4.

Selon la Figure 4, le mesureur de tension 4 est en particulier apte à mesurer la tension $U_{A7,A3}$ entre les points de raccordement $A_7$ et $A_3$. Dans ce cas, la valeur seuil serait égale à zéro. Néanmoins, il pourrait également mesurer la tension $U_{A6,A3}$ entre les points de raccordement $A_6$ et $A_3$, la valeur seuil étant dès lors égale à $U_{A7,A6}$. De manière préférentielle, quelque soit la configuration du dispositif selon l'invention, si le mesureur de tension 4 mesure la tension $U_{Ax,Ay}$ entre le point de raccordement $A_x$ de la première branche 11 et le point de raccordement $A_y$ de la seconde branche 12, avec $x \in \{1, , n-1\}$ et $y \in \{n+1, , 2n-1\}$, alors la valeur seuil de tension est égale à $U_{An+x,Ay}$ si $y < n + x$, $U_{Ay,An+x}$ si $y > n + x$, et 0 si $y = n + x$.

Finalement, la présente invention concerne également un véhicule comprenant le dispositif de détection précédemment décrit et pour lequel chacun desdits générateurs électriques est couplé au moyen dudit moyen de couplage à un élément entrainable en rotation par la rotation d'au moins une roue du véhicule, par exemple chaque générateur électrique étant couplé à un essieu ou à une roue différente dudit véhicule.

En résumé, le dispositif et la méthode selon l'invention présentent les avantages suivants par rapport aux techniques existantes:

- ils ne nécessitent pas de relais différentiels devant travailler sur une grande amplitude de tension et de courant;
- ils nécessitent une faible maintenance;
- ils permettent une utilisation directe d'un signal généré par la rotation des roues du véhicule, libre d'une transformation dudit signal comme par exemple: variation de fréquence → variation de tension → système d'analyse; ou variation d'inductance → variation de tension → système d'analyse; ou générateur d'impulsion lumineuse → impulsion électrique → système d'analyse;
- le dispositif de détection fonctionne avec très peu de composants et ceux qui sont utilisés possèdent une grande fiabilité;
- les pannes de la majorité des composants provoquent un déclenchement de la situation sécuritaire (arrêt du véhicule, freins serrés, inhibition de la traction);
- Le mesureur de tension est libre d'une électronique embarquée, avec des composants critiques, d'un circuit complexe ou de logiciels dédiés;
- du fait de sa simplicité, le dispositif de détection peut se déployer sur différents types de véhicule avec un très bas coût d'installation et de maintenance;
- le dispositif de détection est libre d'éléments optiques destiné à une capture d'image et susceptibles d'être perturbé par l'environnement d'utilisation;
- les composants du dispositif de détection selon l'invention qui sont susceptibles de se trouver à l'extérieur du véhicule sont rustiques et fiables, donc, résistants aux grandes variations de température;
- le dispositif de détection est libre d'un échantillonnage de signaux ou de la nécessité de les dérivés, évitant ainsi un développement logiciel et un matériel (hardware) spécifique;
- ledit signalement d'une valeur de tension $U_{Ax,Ay}$ dépassant une valeur seuil est apte à couper une alimentation d'un moteur dudit véhicule, en particulier de tous les moteurs du véhicule dans le cas où une roue tourne alors que le véhicule est arrêté, ou encore à entrainer l'arrêt dudit véhicule dans le cas d'une roue bloquée pendant un déplacement du véhicule.

## Revendications

1. Dispositif de détection (1) d'un frottement roue-piste adapté à la détection d'un frottement d'une roue d'un véhicule (6) avec une piste et destiné à équiper ledit véhicule (6), ledit dispositif étant **caractérisé en ce qu'**il comprend:

   - un circuit électrique comprenant deux branches (11, 12), respectivement une première branche (11) et une seconde branche (12), montées en pont et s'intersectant en un premier noeud $A_0$ et en un second noeud $A_n$, chaque branche comprenant n tronçons électriques, $n \geq 2$, chaque tronçon comprenant une même résistance électrique ($R_1$, $R_2$, $R_3$, $R_4$) et un même générateur électrique (C1, C2, C3, C4) connectés en série l'un à l'autre;
   - chaque tronçon électrique de chaque branche (11, 12) étant électriquement connectés en série les uns aux autres en des points de raccordement dénotés $A_i$ pour la première branche (11), et $A_{n+i}$ pour la seconde branche (12), $i = 1, ..., n-1$;
   - chaque générateur électrique ($G_1$, $G_2$, $G_3$, $G_4$) comprenant un moyen de couplage (C1, C2, C3, C4) apte à le coupler à un élément (E1, E2, E3, E4) entrainable en rotation par la rotation d'au moins une roue du véhicule, de sorte que ledit générateur électrique ($G_1$, $G_2$, $G_3$, $G_4$) soit apte à produire une énergie électrique à partir de la rotation dudit élément (E1, E2, E3, E4), et destinée à être transmise audit tronçon;
   - un mesureur de tension (4) apte à mesurer la tension $U_{Ax,Ay}$ entre le point de raccordement $A_x$ et le point de raccordement $A_y$ et à signaler une valeur de tension dépassant une valeur seuil, avec $x \in \{1, , n-1\}$ et $y \in \{n+1, , 2n-1\}$.

2. Dispositif selon la revendication 1, **caractérisé en ce que** $A_i$, respectivement $A_{n+i}$, est le point de raccordement entre le $i^{ème}$ tronçon, noté $T_i$, et le $i+1^{ème}$ tronçon, noté $T_{i+i}$, de la première branche (11), respectivement de la seconde branche (12), lesdits tronçons étant comptés successivement de $T_1$ à $T_n$ à partir dudit premier noeud Ao jusqu'au second noeud $A_n$, $T_1$ étant le premier tronçon électriquement connecté en série au premier noeud $A_0$ pour la première branche (11), respectivement pour la seconde branche (12), et $T_{i+i}$ étant le $i+1^{ème}$ tronçon de la première branche (11), respectivement de la seconde branche (12), électriquement connecté en série au $i^{ème}$ tronçon $T_i$ au point de raccordement $A_i$ pour la première branche (11), respectivement $A_{n+i}$ pour la seconde branche (12), le $n^{éme}$ tronçon $T_n$ de la première branche (11), respectivement de la seconde branche (12), étant électriquement connecté en série au second noeud $A_n$.

3. Dispositif de détection selon une des revendications 1 à 2, **caractérisé en ce que** ledit générateur électrique ($G_1$, $G_2$, $G_3$, $G_4$) est un générateur à tension constante, ou un générateur tachymétrique, ou un générateur de tension alternée ou un générateur de courant.

4. Dispositif de détection selon une des revendications 1 à 3, **caractérisé en ce que** chaque tronçon est disposé de façon à ce que du premier noeud $A_0$ au second noeud $A_n$ se succèdent alternativement ledit générateur électrique ($G_1$, $G_2$, $G_3$, $G_4$) et ladite résistance électrique ($R_1$, $R_2$, $R_3$, $R_4$), le générateur électrique ($G_1$, $G_2$, $G_3$, $G_4$) du premier tronçon de chaque branche étant connecté directement audit premier noeud $A_0$.

5. Dispositif de détection selon une des revendications 2 à 4, caractérisé en ce que chaque tronçon $T_k$ avec k = 1,..., n, de la première branche (11) et respectivement de la seconde branche (12) est disposé de façon à ce que:

   - son générateur électrique ($G_1$, $G_2$, $G_3$, $G_4$) soit directement connecté au premier noeud $A_0$ et sa résistance électrique ($R_1$, $R_2$, $R_3$, $R_4$) au premier point de raccordement $A_1$ pour la première branche, respectivement $A_{k+n}$ pour la seconde branche, lorsque k = 1;
   - son générateur électrique ($G_1$ $G_2$, $G_3$, $G_4$) soit directement connecté au point de raccordement $A_{k-1}$ pour la première branche, respectivement $A_{k+n-1}$ pour la seconde branche et sa résistance électrique ($R_1$, $R_2$, $R_3$, $R_4$) soit directement raccordée au point de raccordement $A_k$ pour la première branche, respectivement $A_{k+n}$ pour la seconde branche, lorsque 1 < k < n;
   - son générateur électrique ($G_1$, $G_2$, $G_3$, $G_4$) soit directement connecté au point de raccordement $A_{n-1}$ pour la première branche, respectivement $A_{n+k-1}$ pour la seconde branche, et sa résistance électrique ($R_1$, $R_2$, $R_3$, $R_4$) soit directement raccordée au point de raccordement $A_n$ pour la première et la seconde branche lorsque k = n.

6. Dispositif de détection selon une des revendications 1 à 5, **caractérisé en ce que** chaque branche comprend deux tronçons, i.e. n=2, le générateur électrique ($G_1$) du premier tronçon $T_1$ de la première branche (11) étant apte à être couplé à un élément (E1) activement entrainable en rotation pour l'entrainement en rotation d'une première roue du véhicule, et ledit générateur électrique ($G_2$) du second tronçon $T_2$ de la première branche (11) étant apte à être couplé à un élément (E2) activement entrainable en rotation pour l'entrainement en rotation d'une seconde roue dudit véhicule, et **en ce que** pour la seconde branche (12), ledit générateur électrique ($G_3$) du premier tronçon $T_1$ est apte à être couplé à un élément (E3) activement entrainable en rotation pour l'entrainement en rotation d'une troisième roue du véhicule, et ledit générateur électrique ($G_4$) du second tronçon $T_2$ est apte à être couplé à un élément (E4) activement entrainable en rotation pour l'entraînement en rotation d'une quatrième roue du véhicule.

7. Dispositif de détection selon la revendication 6, **caractérisé en ce que** la première et la troisième roue ont un axe de rotation confondu, et **en ce que** la seconde et la quatrième roue ont également un axe de rotation confondu, différent de l'axe de rotation de la première ou de la troisième roue.

8. Dispositif de détection selon la revendication 6, **caractérisé en ce que** la première et la quatrième roue ont un axe de rotation confondu, et **en ce que** la seconde et la troisième roue ont également un axe de rotation confondu, différent de l'axe de rotation de la première ou de la quatrième roue.

9. Dispositif de détection selon une des revendications 1 à 8, **caractérisé en ce que** le moyen de couplage (C1, C2, C3, C4) est apte à accoupler ledit générateur électrique ($G_1$, $G_2$, $C_3$, $G_4$) à un axe d' entrainement en rotation d'une roue, ou à un axe de rotation de la roue, ou à un essieu dudit véhicule.

**10.** Dispositif de détection selon une des revendications précédentes, comprenant un premier dispositif de détection de frottement selon une des revendications 1 à 10 couplé en série à un second dispositif de détection selon une des revendications 1 à 10.

**11.** Véhicule comprenant le dispositif de détection selon une des revendications 1 à 10.

**12.** Méthode de détection d'un frottement roue-piste adapté à la détection d'un frottement d'une roue d'un véhicule (6) avec une piste, ladite méthode comprenant les étapes suivantes:

    - pour chaque élément (E1, E2, E3, E4) d'un ensemble comprenant 2n éléments, $n \geq 2$, chacun entrainable en rotation indépendamment les uns des autres par la rotation d'au moins une roue dudit véhicule et chacun étant associé à l'entraînement en rotation de ladite roue du véhicule, une génération par un générateur électrique $(G_1, G_2, G_3, G_4)$ d'une énergie électrique à partir d'une rotation dudit élément (E1, E2, E3, E4), de sorte que ladite énergie électrique soit susceptible d'être générée par ledit générateur électrique $(G_1, G_2, G_3, G_4)$ à partir de la rotation dudit élément;
    - pour chaque énergie électrique générée par un desdits générateurs électriques $(G_1, G_2, G_3, G_4)$, une alimentation avec ladite énergie électrique d'un tronçon électrique d'un circuit électrique comprenant deux branches, respectivement une première branche (11) et une seconde branche (12), montées en pont et s'intersectant en un premier noeud $A_0$ et en un second noeud $A_n$, chaque branche comprenant n tronçons électriques raccordés en série les uns à la suite des autres, chaque tronçon comprenant un seul desdits générateurs électriques $(G_1, G_2, G_3, G_4)$ pour son alimentation en énergie électrique et une résistance électrique $(R_1, R_2, R_3, R_4)$, chaque résistance électrique $(R_1, R_2, R_3, R_4)$ et chaque générateur électrique $(G_1, G_2, G_3, G_4)$ de chaque branche (11, 12) étant identiques, chaque tronçon étant raccordé à un autre tronçon en un point de raccordement dénoté $A_i$ pour la première branche (11), et $A_{n+i}$ pour la seconde branche (12), avec i = 1, ..., n-1;
    - une mesure de la tension $U_{Ax,Ay}$ entre le point de raccordement $A_x$ et le point de raccordement $A_y$, $x \in \{1, , n-1\}$ et $y \in \{n+1, 2n-1\}$;
    - un signalement d'une valeur de tension $U_{Ax,Ay}$ dépassant une valeur seuil.

**13.** Méthode de détection selon la revendication 12, **caractérisée en ce qu'**elle comprend une transmission dudit signalement à un poste de contrôle (5) embarqué ou au sol.

**14.** Méthode de détection selon une des revendications 12 ou 13, **caractérisée par** un couplage dudit générateur électrique $(G_1, G_2, G_3, G_4)$ avec un axe de rotation d'une roue dudit véhicule.

**15.** Méthode de détection selon une des revendications 12 à 14, **caractérisée en ce que** chaque tronçon de ladite première branche (11) est apte à être alimenté en énergie électrique par des éléments (E1, E2) destinés à entrainer en rotation des roues gauches du véhicule par rapport à son sens de déplacement en marche avant et chaque tronçon de ladite seconde branche (12) est apte à être alimenté en énergie électrique par des éléments (E3, E4) destinés à entrainer en rotation des roues droites du véhicule par rapport à son sens de déplacement en marche avant ou inversement.

FIG 1

EP 2 712 760 A1

FIG 2

FIG 3

FIG 4

Europäisches
Patentamt

European
Patent Office

Office européen
des brevets

**RAPPORT DE RECHERCHE EUROPEENNE**

Numéro de la demande

EP 12 29 0320

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 3 663 875 A (ASHIYA MASAHIRO) 16 mai 1972 (1972-05-16) * le document en entier * ----- | 1-15 | INV. B60L3/10 B60T8/17 H02P5/685 |
| A | US 3 764 867 A (SMITH R) 9 octobre 1973 (1973-10-09) * figure 4 * ----- | 1-15 | |

DOMAINES TECHNIQUES RECHERCHES (IPC)

B60L
B60T
H02P

Le présent rapport a été établi pour toutes les revendications

| Lieu de la recherche | Date d'achèvement de la recherche | Examinateur |
|---|---|---|
| Munich | 11 avril 2013 | Dekker, Wouter |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 29 0320

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2013

| Document brevet cité au rapport de recherche | | Date de publication | Membre(s) de la famille de brevet(s) | | Date de publication |
|---|---|---|---|---|---|
| US 3663875 | A | 16-05-1972 | ES | 376030 A1 | 01-03-1972 |
| | | | FR | 2029688 A1 | 23-10-1970 |
| | | | GB | 1253493 A | 17-11-1971 |
| | | | US | 3663875 A | 16-05-1972 |
| | | | YU | 22970 A | 28-02-1977 |
| US 3764867 | A | 09-10-1973 | CA | 1002155 A1 | 21-12-1976 |
| | | | US | 3764867 A | 09-10-1973 |
| | | | ZA | 7308302 A | 30-10-1974 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2735090 A
- US 20040130618 A1
- US 20060180760 A1
- US 4071282 A
- US 20080211434 A1
- US 4463289 A1